# EUROPÄISCHE PATENTSCHRIFT

(11) **EP 3 720 697 B1**
(45) Veröffentlichungstag und Bekanntmachung des Hinweises auf die Patenterteilung: **09.07.2025**
(21) Anmeldenummer: 19812958.7
(22) Anmeldetag: 27.11.2019
(51) Int. Cl.: B32B 1/00, B29C 45/14, B32B 3/30, B32B 5/02, B32B 7/025, B32B 27/00, B60H 1/22, B61D 19/02

(54) **INNENVERKLEIDUNG**
LINING
HABILLAGE INTERIEUR

(30) Priorität: 07.12.2018 DE 102018009526
(43) Veröffentlichungstag der Anmeldung: 14.10.2020
(73) Patentinhaber: K.L. Kaschier- und Laminier GmbH, 48455 Bad Bentheim-Gildehaus (DE)
(72) Erfinder: SCHULZE WEHNINCK, Rembert, 82327 Tutzing (DE)
(74) Vertreter: Cohausz Hannig Borkowski Wißgott
(86) Internationale Anmeldenummer: PCT/EP2019/082708
(87) Internationale Veröffentlichungsnummer: WO 2020/114851

(56) Entgegenhaltungen:
- WO-A1-2014/202768
- DE-A1- 102015 007 885

## Beschreibung

### Innenverkleidung

Die Erfindung betrifft eine Innenverkleidung eines Kraftfahrzeugs insbesondere einer Kraftfahrzeugtür.

Es ist bekannt, die Innenverkleidung eines Kfz. mit einer Heizfläche zu versehen. Hierbei hat es sich gezeigt, dass der technische Aufbau aufwändig ist, so dass Herstellung und Montage zu einem erheblichen Zeit- und Kostenaufwand führen.

Die internationale Anmeldung WO 2014/202768 A1 beschreibt ein Innenraumverkleidungselement für ein Fahrzeug mit einem Dekorbezug, der mit seiner Rückseite flächig in wärmeleitendem Kontakt mit einer gedruckten Heizung steht. Die Heizung umfasst eine Mehrzahl von flächigen Widerstandselementen. Das Dekormaterial kann eine Folie sein. Alternativ kann der Dekorbezug eine Kaschierung eines Gewirkes mit einer sehr dünnen Folie sein. Der bedruckte Dekorbezug kann hinterspritzt oder in einer geheizten Presse auf eine Trägertafel aufkaschiert sein. Als Material der Trägertafel kann mit Natur- oder Kunstfasern verpresstes Epoxidharz verwendet werden. Besonders ist hierbei, dass die Heizung direkt auf einer Komponente (Dekorbezug, Polsterlage oder formgebender Träger) des Innenraumverkleidungselements gedruckt ist, ohne dass es zum Einsatz eines separaten Drucksubstrats kommt, welches nach dem Bedrucken in den Lagenverbund des Innenraumverkleidungselements eingebracht werden müsste.

Die deutsche Veröffentlichung DE 10 2015 007 885 A1 offenbart ein Verbundbauteil zur Fahrzeuginnenverkleidung, das gekennzeichnet ist durch ein Heizelement, das zwischen einer Dekorlage und einem Trägerelement angeordnet ist. Das Heizelement kann eine elektrisch leitende Folie sein, die als Widerstandsheizung fungiert oder als Peltier-Element ausgebildet ist. Die Dekorlage besteht bevorzugt aus Polypropylen und kann mit Naturfasern verstärkt sein. Das Trägerelement besteht bevorzugt aus geschäumtem Polyethylenterephthalat.

Aufgabe der Erfindung ist es, eine heizbare Innenverkleidung eines Kfz. zu schaffen, die in ihrer Konstruktion besonders einfach ist, so dass Herstellung und Montage einfach und kostengering sind.

Diese Aufgabe wird erfindungsgemäß gelöst durch eine Tragschicht, auf deren dem Kraftfahrzeug-Innenraum zugewandten Außenfläche eine Heizfolie befestigt ist und durch eine auf der Außenfläche der Heizfolie befestigte Dekorschicht, wobei die Heizfolie keine Leiterbahnen oder Leiterstrukturen aufweist, sondern aus einem selbstleitenden Material besteht, das bei angelegter Spannung aufgrund seines elektrischen Widerstandes Wärme erzeugt, wobei
- die Heizfolie in die Form einer Spritzgussmaschine gelegt, danach von Kunststoff der Tragschicht hinterspritzt wird, und danach mit der Dekorschicht versehen wird, die aufgespritzt oder aufgeklebt wird, oder
- die Heizfolie zusammen mit einer noch nicht verdichteten Naturfasermatte der Tragschicht in einer Presse unter Druck und Wärmezufuhr geformt wird.

Dies führt zu einer technisch einfachen und kostengünstigen Herstellung und Montage. Es ist nicht mehr erforderlich, die Heizfolie aufzukleben, sondern sie wird in einer Ausführungsvariante von der Tragschicht hinterspritzt.

Die Naturfasern der Fasermatte können in Polypropylen eingebettet sein.

Eine hohe Stabilität bei einfacher Herstellung und Montage wird erreicht, wenn die Tragschicht aus Kunststoff auf der der Heizfolie abgewandten Rückseite Versteifungsrippen aufweist.

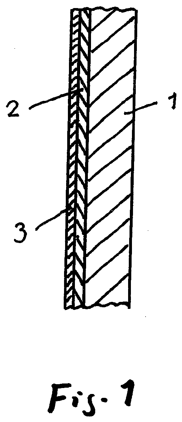

Ein besonders einfaches Verfahren zum Herstellen einer Kfz.-Innenverkleidung mit Heizung ist gegeben, wenn die Heizfolie in die Form der Spritzgussmaschine eingeklebt und danach von Kunststoff der Tragschicht hinterspritzt wird. Ausführungsbeispiele der Erfindung werden im Folgenden näher beschrieben. Die Zeichnung zeigt schematisch ausschnittsweise einen Querschnitt durch die Innenverkleidung.

Die Innenwände eines Kfz. und die Innenseiten der Türen eines Kfz. sind mit einer Innenverkleidung versehen, die eine Tragschicht 1 aufweisen, die an den Innenteilen der Kfz.-Wände befestigt insbesondere angeklebt sind. Hierbei besteht die Tragschicht 1 aus einem Kunststoff insbesondere einem Thermoplast und weist rückseitig Versteifungsrippen auf.

Auf der dem Kfz.-Innenraum zugewandten Außenfläche der Tragschicht 1 ist eine Heizfolie 2 befestigt insbesondere durch den Kunststoff der Tragschicht 1 hinterspritzt und wird danach mit einer Dekorschicht 3 versehen, die aufgespritzt oder aufgeklebt ist. Die Tragschicht ist in einer Version ein Thermoplast.

Die Heizfolie 2 wird in die Form einer Spritzgussmaschine gelegt insbesondere eingeklebt und danach von Kunststoff der Tragschicht hinterspritzt.

In einer vorteilhaften Ausführung weist die Tragschicht 1 eine Naturfasermatte auf, bei der die Naturfasern der Fasermatte in Polypropylen eingebettet sind. Hierbei wird die Heizfolie 2 zusammen mit einer noch nicht verdichteten Naturfasermatte der Tragschicht 1 in einer Presse unter Druck und Wärmezufuhr geformt.

Von Bedeutung ist, dass die Heizfolie 2 keine Leiterbahnen oder Leiterstrukturen aufweist, sondern aus einem selbstleitenden Material besteht, das bei angelegter Spannung aufgrund ihres elektrischen Widerstandes die Wärme erzeugt.

Danach wird die mit der Heizfolie versehene Tragschicht 1 mit der Dekorschicht 3 versehen insbesondere durch Aufkleben oder durch zu vorige Einlage der Dekorschicht in die Form der Spritzgussmaschine.

Die Heizfolie 2 weist eine Kunststofffolie auf mit einer elektrisch leitenden Beschichtung.

## Patentansprüche

1. Verfahren zum Herstellen einer Innenverkleidung eines Kraftfahrzeugs insbesondere einer Kraftfahrzeugtür, umfassend eine Tragschicht (1), auf deren dem Kraftfahrzeug-Innenraum zugewandten Außenfläche eine Heizfolie (2) befestigt ist und eine auf der Außenfläche der Heizfolie (2) befestigte Dekorschicht (3), wobei die Heizfolie (2) keine Leiterbahnen oder Leiterstrukturen aufweist, sondern aus einem selbstleitenden Material besteht, das bei angelegter Spannung aufgrund seines elektrischen Widerstandes Wärme erzeugt, **dadurch gekennzeichnet,**
**dass** die Heizfolie (2) in die Form einer Spritzgussmaschine gelegt, danach von Kunststoff der Tragschicht (1) hinterspritzt wird, und danach mit der Dekorschicht (3) versehen wird, die aufgespritzt oder aufgeklebt wird, oder **dass** die Heizfolie (2) zusammen mit einer noch nicht verdichteten Naturfasermatte der Tragschicht (1) in einer Presse unter Druck und Wärmezufuhr geformt wird.

2. Verfahren nach Anspruch 1, **dadurch gekennzeichnet, dass** die Naturfasern der Naturfasermatte in Polypropylen eingebettet sind.

3. Verfahren nach Anspruch 1, **dadurch gekennzeichnet, dass** die Tragschicht (1) aus Kunststoff auf der der Heizfolie (2) abgewandten Rückseite Versteifungsrippen aufweist.

4. Verfahren nach Anspruch 1, **dadurch gekennzeichnet, dass** die Heizfolie (2) in die Form der Spritzgussmaschine eingeklebt und danach von Kunststoff der Tragschicht (1) hinterspritzt wird.

## Claims

1. Method for producing an interior lining of a motor vehicle, in particular a motor vehicle door, comprising a support layer (1), to the outer surface of which, facing the motor vehicle interior, a heating foil (2) is secured, and a decorative layer (3) is secured to the outer surface of the heating foil (2), the heating foil (2) having no conductor tracks nor conductor structures, but consisting of a self-conducting material, which generates heat due to its electrical resistance when voltage is applied, **characterized in that** the heating foil (2) is placed in the mould of an injection moulding machine and plastic of the base layer (1) is then injected on its back, and the heating foil (2) is then provided with the decorative layer (3), which is injected or bonded, or **in that** the heating foil (2) is shaped together with a not yet compacted natural fibre mat of the base layer (1) in a press under pressure and heat supply.

2. Method according to claim 1, **characterized in that** the natural fibres of the natural fibre mat are embedded in polypropylene.

3. Method according to claim 1, **characterized in that** the plastic support layer (1) has stiffening ribs on the back side facing away from the heating foil (2).

4. Method according to claim 1, **characterized in that** the heating foil (2) is sticked into the mould of the injection moulding machine and plastic of the base layer (1) is then injected on its back.

## Revendications

1. Procédé de fabrication d'un revêtement intérieur de véhicule automobile, en particulier d'une porte de véhicule automobile, comprenant une couche de support (1), sur la surface extérieure de laquelle, tournée vers l'intérieur du véhicule automobile, est fixée une feuille chauffante (2), et une couche décorative (3) est fixée sur la surface extérieure de la feuille chauffante (2), la feuille chauffante (2) n'ayant pas de pistes conductrices ni de structures conductrices, mais étant constituée d'un matériau auto-conducteur, qui génère de la chaleur grâce à sa résistance électrique lorsqu'elle est mise sous tension, **caractérisée en ce que** la feuille chauffante (2) est placée dans le moule d'une machine de moulage par injection, puis du plastique de la couche de base (1) est injecté sur son dos et la feuille chauffante (2) est ensuite pourvue de la couche décorative (3), qui est injectée ou collée, ou **en ce que** la feuille chauffante (2) est formée avec un matelas de fibres naturelles non encore compacté de la couche de base (1) dans une presse sous pression et sous apport de chaleur.

2. Procédé selon la revendication 1, **caractérisé en ce que** les fibres naturelles du matelas de fibres naturelles sont noyées dans du polypropylène.

3. Procédé selon la revendication 1, **caractérisé en ce que** la couche de support (1) en plastique comporte des nervures de raidissement sur la face arrière opposée à la feuille chauffante (2).

4. Procédé selon la revendication 1, **caractérisé en ce que** la feuille chauffante (2) est collée dans le moule de la machine de moulage par injection, puis le plastique de la couche de base (1) est injecté sur son dos.
